# EUROPEAN PATENT APPLICATION

(11) **EP 4 624 919 A1**
(43) Date of publication of application: **01.10.2025**
(21) Application number: 25165520.5
(22) Date of filing: 24.03.2025
(51) Int. Cl.: G01N 29/02, G01N 29/036, G01N 29/22

(54) **SENSING SENSOR**

(30) Priority: 28.03.2024 JP 2024054530
(71) Applicant: Nihon Dempa Kogyo Co., Ltd., Tokyo 151-8569 (JP)
(72) Inventor: KUKITA, Hiroyuki, Saitama (JP)
(74) Representative: Becker, Eberhard

(57) **Abstract**

A sensing sensor (S100) includes a piezoelectric oscillation portion (20) in which a reaction electrode (22) to which a target substance in a gas adheres and a reference electrode (23) to which the target substance does not adhere are disposed on a sensor substrate (21) as a piezoelectric resonator, an exterior cover (12) that has an opening portion (12a) through which the gas passes and covers the piezoelectric oscillation portion (20), and a support substrate (30) that supports the piezoelectric oscillation portion (20). The sensor substrate (21) is mounted on the support substrate (30) such that the reaction electrode (22) is opposed to the opening portion (12a), and a temperature sensor (25) is arranged on an opposite side surface of a surface on which the reaction electrode (22) and the reference electrode (23) are disposed.

## Description

### TECHNICAL FIELD

This disclosure relates to a sensing sensor.

### DESCRIPTION OF THE RELATED ART

Conventionally, as a sensing sensor that senses a substance contained in a gas, there has been known a Quartz Crystal Microbalance (QCM) type one using a crystal unit. In this sensing sensor, a target substance in the gas introduced into the sensor adheres to the crystal unit, and a kind, an amount of adhesion, and the like of the adhered target substance are detected (for example, see Japanese Unexamined Patent Application Publication No. 2020-139788).

There has been a possibility of damage to a temperature sensor inside the sensing sensor or a peripheral structure thereof due to a gas containing oxygen plasma, oxygen radicals, or the like generated in a semiconductor manufacturing process, leading to a deterioration in performance of the sensing sensor.

A need thus exists for a sensing sensor which is not susceptible to the drawback mentioned above.

### SUMMARY

According to an aspect of this disclosure, there is provided a sensing sensor that includes a piezoelectric oscillation portion in which a reaction electrode to which a target substance in a gas adheres and a reference electrode to which the target substance does not adhere are disposed on a sensor substrate as a piezoelectric resonator, an exterior cover that has an opening portion through which the gas passes and covers the piezoelectric oscillation portion, and a support substrate that supports the piezoelectric oscillation portion. The sensor substrate is mounted on the support substrate such that the reaction electrode is opposed to the opening portion, and a temperature sensor is arranged on an opposite side surface of a surface on which the reaction electrode and the reference electrode are disposed.

In the sensing sensor, the support substrate may have a cavity that receives the temperature sensor, and the temperature sensor may be positioned inside the cavity with the sensor substrate being mounted on the support substrate.

The sensing sensor may further include an electrode cover that has a through hole formed to be larger than the reaction electrode, and is arranged to cover the sensor substrate with the reaction electrode being exposed via the through hole.

In the sensing sensor, the electrode cover may have a partition wall between a portion covering the reference electrode and the through hole.

In the sensing sensor, the reaction electrode may be in a circular shape, and the through hole is in an elliptical shape having a short axis longer than a diameter of the reaction electrode.

The sensing sensor may further include a clip for securing the electrode cover to the sensor substrate. The clip may be a member in a U shape mounted so as to clamp a part of a peripheral edge portion of the electrode cover and a part of a peripheral edge portion of the support substrate with the sensor substrate being interposed between the electrode cover and the support substrate.

In the sensing sensor, the clip may be arranged so as to clamp a thin portion formed on the peripheral edge portion of the electrode cover.

The present disclosure is advantageous as it is able to provide a sensing sensor less likely to have a performance deterioration caused by an effect of corrosion action of a gas.

### BRIEF DESCRIPTION OF THE DRAWINGS

The foregoing and additional features and characteristics of this disclosure will become more apparent from the following detailed description considered with reference to the accompanying drawings, wherein:
FIG. 1 is a perspective view of a sensing sensor;
FIG. 2 is a perspective view illustrating a part of the sensing sensor;
FIG. 3 is a schematic diagram illustrating a cross-sectional structure of the sensing sensor;
FIG. 4 is a drawing illustrating an exemplary configuration of a conventional sensing sensor;
FIG. 5 is a perspective view of an electrode cover and a sensor substrate viewed from a lower side; and
FIG. 6 is a perspective cross-sectional view of the electrode cover.

### DETAILED DESCRIPTION

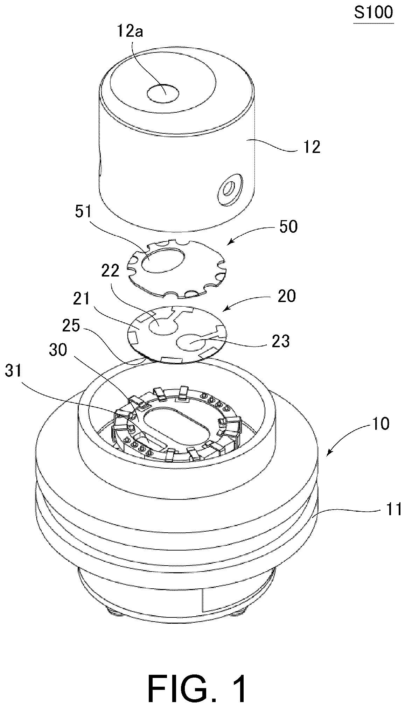

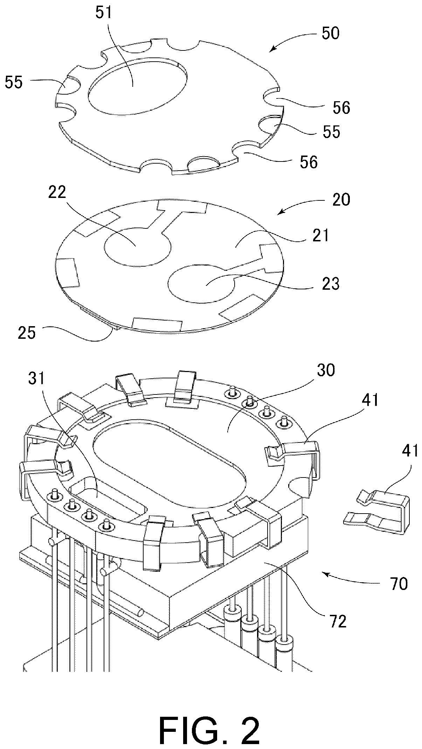

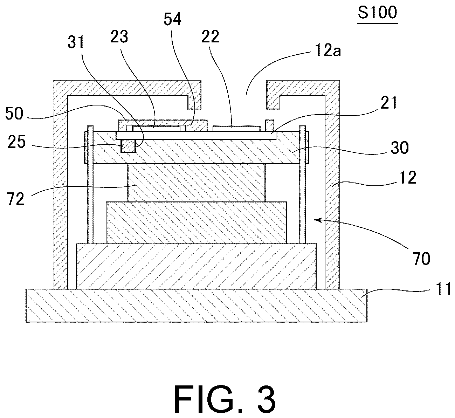

FIG. 1 is a perspective view of a sensing sensor. FIG. 2 is a perspective view illustrating a part of the sensing sensor. FIG. 3 is a schematic diagram illustrating a cross-sectional structure of the sensing sensor. In the following description, terms indicating directions, such as "above" and "below," are used corresponding to directions of objects in the drawings.

A sensing sensor S100 in the embodiment includes a housing 10, a piezoelectric oscillation portion 20, a support substrate 30, an electrode cover 50, and a base structure 70 as illustrated in FIG. 1 and FIG. 2.

The operating principle of the sensing sensor S100 is conventionally publicly known, and therefore, a brief description will be given below. In the sensing sensor S100, a piezoelectric resonator of the piezoelectric oscillation portion 20 is cooled by a Peltier element, and a gas supplied from the outside and entering the sensing sensor S 100 is cooled by contacting a reaction electrode 22 and adheres to this reaction electrode 22. Thereafter, while respective oscillation frequencies f1, f2 of the reaction electrode 22 and a reference electrode 23 are being obtained, the temperature of the piezoelectric resonator is increased. This temperature increase causes a target substance adhering to the reaction electrode 22 to detach. This detachment significantly changes the oscillation frequency f1. On the other hand, the oscillation frequency f2 of the reference electrode 23 hardly changes. On the basis of such a difference between the oscillation frequencies f1 and f2, a degree of change in the oscillation frequency f1, and the like, a mass and/or a kind of the target substance are identified.

### (Description of Each Portion)

The housing 10 has a supporting member 11 and an exterior cover 12 as illustrated in FIG. 1. The supporting member 11 is a member that supports the piezoelectric oscillation portion 20, the support substrate 30, the electrode cover 50, and the base structure 70 (FIG. 2).

The exterior cover 12 is mounted on the supporting member 11 so as to cover the piezoelectric oscillation portion 20, the electrode cover 50, and the like. The exterior cover 12 has a cylindrical shape in this example. The exterior cover 12 has an upper surface on which an opening portion 12a is formed. The opening portion 12a is a portion through which the gas containing the target substance passes. The gas is not limited to a specific object, but, as an example, is a halogen-based gas with high corrosivity generated in a semiconductor manufacturing apparatus that performs plasma etching.

The piezoelectric oscillation portion 20 includes a sensor substrate 21 and a temperature sensor 25. The sensor substrate 21 has an outline formed into an approximately circular shape in this example as illustrated in FIG. 1 and FIG. 2. The sensor substrate 21 is a crystal vibration plate as a piezoelectric resonator.

The sensor substrate 21 has the reaction electrode 22 and the reference electrode 23 as illustrated in FIG. 2. The reaction electrode 22 and the reference electrode 23 are formed on an upper surface of the sensor substrate 21. The sensor substrate 21 is mounted on the support substrate 30 such that the reaction electrode 22 and the reference electrode 23 face a side of the opening portion 12a as illustrated in FIG. 3.

The reaction electrode 22 is an electrode to which the target substance contained in the gas adheres. The reaction electrode 22 is arranged at a position facing the opening portion 12a as illustrated in FIG. 3. The reference electrode 23 is formed at a position adjacent to the reaction electrode 22 on the upper surface of the sensor substrate 21. The reference electrode 23 is an electrode to which the target substance in the gas does not adhere. The reaction electrode 22 and the reference electrode 23 both have an outline in a circular shape as an example.

The temperature sensor 25 is a sensor for detecting a temperature of the sensor substrate 21. On the basis of an output value of the temperature sensor 25, an operation of the Peltier element (details will be described below) is controlled, and the temperature of the sensor substrate 21 as a crystal unit is adjusted.

The support substrate 30 is a member that supports the piezoelectric oscillation portion 20 as illustrated in FIG. 2 and FIG. 3. The support substrate 30 is a Low Temperature Co-fired Ceramics (LTCC) substrate as an example. A cavity 31 is formed on the support substrate 30. The cavity 31 is a depressed portion that receives the temperature sensor 25. The cavity 31 is engraved in a thickness direction of the support substrate 30.

The base structure 70 includes an oscillation control circuit (not illustrated) and a Peltier element 72 (see FIG. 3). The oscillation control circuit is a circuit for oscillating the piezoelectric resonator. The Peltier element 72 is a component for cooling the piezoelectric resonator. The Peltier element 72 is disposed so as to be thermally in contact with a part of the supporting member 11.

### (Corrosion Problem)

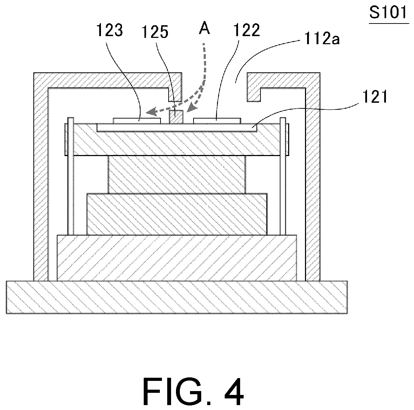

FIG. 4 is a drawing illustrating an exemplary configuration of a conventional sensing sensor. In this conventional configuration, a temperature sensor is disposed on an upper surface of a sensor substrate 121. In this case, for example, oxygen plasma or oxygen radicals generated in a semiconductor manufacturing process get into the sensing sensor S101 through an opening portion 112a (see arrow A). Such oxygen plasma or oxygen radicals have sometimes corroded a temperature sensor 125 or a conductive adhesive that adheres the temperature sensor 125. It is also assumed that the oxygen plasma or the oxygen radicals reach not only a reaction electrode 122 but also a reference electrode 123 to damage the reference electrode 123. The corrosion as described above reduces a service life of the sensing sensor S101 or deteriorates the performance, thus being unpreferable.

In the configuration of the embodiment, the temperature sensor 25 is arranged on an opposite side surface of a surface on which the reaction electrode 22 and the reference electrode 23 are disposed. That is, the temperature sensor 25 is arranged on a lower surface of the sensor substrate 21.

The temperature sensor 25 is positioned inside the cavity 31 with the sensor substrate 21 being mounted on the support substrate 30. Specifically, as an example, the temperature sensor 25 and a conductive adhesive arranged in contact with the temperature sensor 25 are arranged so as to fit into the cavity 31. The cavity 31 is covered with the sensor substrate 21. Such a configuration causes the oxygen plasma or the oxygen radicals to be less likely to be in contact with the temperature sensor 25 and the conductive adhesive compared with the configuration in which the temperature sensor 25 is arranged on the upper surface of the sensor substrate 21, and as a result, the corrosion of the temperature sensor 25 and the conductive adhesive is preventable.

The electrode cover 50 is a member that covers the piezoelectric oscillation portion 20 as illustrated in FIG. 2 and FIG. 3. The electrode cover 50 is formed into a circular plate shape as a whole. The electrode cover 50 has a through hole 51. The through hole 51 is formed to be larger than the reaction electrode 22. The through hole 51 is also formed to be larger than the opening portion 12a in this example. The reaction electrode 22 is exposed via the through hole 51 with the electrode cover 50 being mounted on the piezoelectric oscillation portion 20. Such a configuration enables the target substance in the gas to adhere to the reaction electrode 22 and the sensing sensor S100 to detect this target substance even when the electrode cover 50 is mounted on the piezoelectric oscillation portion 20.

In the embodiment, the through hole 51 is arranged such that the center of an ellipse corresponds to the center of the circle of the reaction electrode 22 as an example. The through hole 51 is in an elliptical shape having a short axis longer than an outline shape of the reaction electrode 22, specifically, a short axis longer than a diameter of the circle of the reaction electrode 22. Such a configuration enables the through hole 51 to be formed to be large with respect to the circular reaction electrode 22, and therefore, a large region of the sensor substrate 21 not restrained by the electrode cover 50 can be provided, and the piezoelectric resonator of the sensor substrate 21 can be properly vibrated.

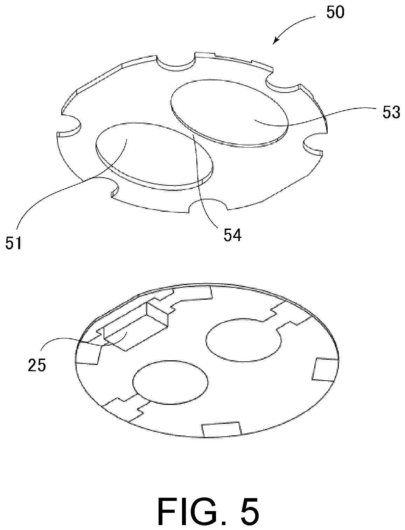

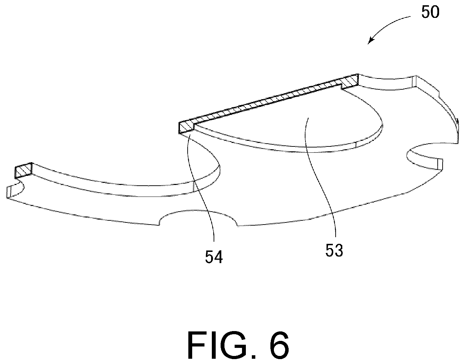

FIG. 5 is a perspective view of the electrode cover and the sensor substrate viewed from a lower side. FIG. 6 is a perspective cross-sectional view of the electrode cover. The electrode cover 50 has a depressed portion 53 and a partition wall 54 as illustrated in FIG. 5. The depressed portion 53 and the partition wall 54 are disposed on a lower surface of the electrode cover 50. The depressed portion 53 does not penetrate the member of the electrode cover 50, and is a structure portion depressed in a thickness direction of the electrode cover 50. The depressed portion 53 is formed in a region covering the reference electrode 23. The depressed portion 53 is formed so as to have a similar outline shape to that of the through hole 51 as an example.

The partition wall 54 is a wall to partition between the depressed portion 53, which is a portion covering the reference electrode, and the through hole 51. The partition wall 54 is configured to be in contact with the upper surface of the sensor substrate 21 in this example as illustrated in FIG. 3. The formation of such a partition wall 54 stops the entry of the oxygen plasma or the oxygen radicals to a side of the reference electrode 23, and accordingly, the corrosion and deterioration of the reference electrode 23 are prevented.

### (Mounting of Sensor Substrate 21 and Electrode Cover 50)

The electrode cover 50 has a peripheral edge portion where thin portions 55 and cutout portions 56 are formed as illustrated in FIG. 2. The thin portion 55 is a portion of the electrode cover 50 formed to be partly thin. The thin portion 55 is formed to extend in the radial direction on an upper surface of the electrode cover 50 as an example. The cutout portion 56 is a portion of the peripheral edge portion of the electrode cover 50 partly cut out.

While the sensor substrate 21 and the electrode cover 50 may be secured to the support substrate 30 in any method, clips 41 are used in the embodiment as an example. The clip 41 is a member formed into an approximately U shape. The clip 41 is formed, for example, of an elastically deformable conductive material (specifically, a metal). In the embodiment, with the sensor substrate 21 being interposed between the electrode cover 50 and the support substrate 30, the plurality of clips 41 are mounted so as to clamp a part (in particular, the thin portion 55) of the peripheral edge portion of the electrode cover 50 and a part of a peripheral edge portion of the support substrate 30, and thus, the sensor substrate 21 and the electrode cover 50 are secured.

The clip 41 is mounted so as to move inward in the radial direction with respect to the thin portion 55. Parts of the clips 41 among the plurality of clips 41 are mounted at positions of the cutout portions 56. These clips 41 do not add force to the electrode cover 50 and secure the sensor substrate 21 to the support substrate 30. These clips 41 are in contact with an electrode pattern formed on the sensor substrate 21 and an electrode pattern formed on the support substrate 30, and have a function of electrically connecting the electrode patterns to one another. The configuration of the embodiment has an advantage that only the electrode cover 50 can be easily mounted with the sensor substrate 21 being mounted. The clip 41 does not add a large pressure to the component, and therefore, no excessive pressure is added to the piezoelectric oscillation portion 20.

### (Effect of Sensing Sensor S100)

As described above, the sensing sensor S100 of the embodiment has the temperature sensor 25 disposed on the lower surface of the sensor substrate 21, and therefore, the oxygen plasma or the oxygen radicals are less likely to be in contact with the temperature sensor 25 and the conductive adhesive compared with the configuration in which the temperature sensor 25 is disposed on the upper surface of the sensor substrate 21 as described above, thereby allowing prevention of corrosion of the temperature sensor 25 and the conductive adhesive.

In the configuration of the embodiment, even though the temperature sensor 25 is configured to be disposed on the lower surface of the sensor substrate 21 as described above, the sensor substrate 21 is configured to be positioned in the cavity 31, and therefore, a thickness when the sensor substrate 21 and the support substrate 30 are stacked is not increased.

With the configuration of the embodiment, the corrosion of the reference electrode 23 is prevented since the electrode cover 50 is disposed, thereby allowing a reduction in a performance deterioration and a short service life of the sensing sensor S100.

With the configuration of the embodiment, the clip 41 secures the electrode cover 50 and the sensor substrate 21. Accordingly, even in the case where the component of the sensing sensor S 100 is expanded or contracted due to a temperature change, the clip 41 elastically deforms, and thus, an effect that stress generated in each component can be reduced is obtained.

While this disclosure has been described above using the embodiments, the technical scope of this disclosure is not limited to the scope described in the above-described embodiments, and various modifications and changes are possible within the scope of the gist. For example, this disclosure can be functionally or physically distributed and integrated in any unit for all or a part thereof. Additionally, a new embodiment created by any combination of the plurality of embodiments is also included in the embodiments of this disclosure. Effects of the new embodiment created by the combination also include the effects of the original embodiments.

## Claims

1. A sensing sensor (S100) comprising:
a piezoelectric oscillation portion (20) in which a reaction electrode (22) to which a target substance in a gas adheres and a reference electrode (23) to which the target substance does not adhere are disposed on a sensor substrate (21) as a piezoelectric resonator;
an exterior cover (12) that has an opening portion (12a) through which the gas passes and covers the piezoelectric oscillation portion (20); and
a support substrate (30) that supports the piezoelectric oscillation portion (20), wherein
the sensor substrate (21) is mounted on the support substrate (30) such that the reaction electrode (22) is opposed to the opening portion (12a), and a temperature sensor (25) is arranged on an opposite side surface of a surface on which the reaction electrode (22) and the reference electrode (23) are disposed.

2. The sensing sensor (S100) according to claim 1, wherein
the support substrate (30) has a cavity (31) that receives the temperature sensor (25), and the temperature sensor (25) is positioned inside the cavity (31) with the sensor substrate (21) being mounted on the support substrate (30).

3. The sensing sensor (S100) according to claim 1 or 2, further comprising
an electrode cover (50) that has a through hole (51) formed to be larger than the reaction electrode (22), and is arranged to cover the sensor substrate (21) with the reaction electrode (22) being exposed via the through hole (51).

4. The sensing sensor (S100) according to claim 3, wherein
the electrode cover (50) has a partition wall (54) between a portion covering the reference electrode (23) and the through hole (51).

5. The sensing sensor (S100) according to claim 3, wherein
the reaction electrode (22) is in a circular shape, and
the through hole (51) is in an elliptical shape having a short axis longer than a diameter of the reaction electrode (22).

6. The sensing sensor (S100) according to claim 3, further comprising
a clip (41) for securing the electrode cover (50) to the sensor substrate (21), wherein
the clip (41) is a member in a U shape mounted so as to clamp a part of a peripheral edge portion of the electrode cover (50) and a part of a peripheral edge portion of the support substrate (30) with the sensor substrate (21) being interposed between the electrode cover (50) and the support substrate (30).

7. The sensing sensor (S100) according to claim 6, wherein
the clip (41) is arranged so as to clamp a thin portion (55) formed on the peripheral edge portion of the electrode cover (50).
